# EUROPEAN PATENT APPLICATION

(11) **EP 4 787 873 A1**
(43) Date of publication of application: **05.08.2026**
(21) Application number: 25305132.0
(22) Date of filing: 30.01.2025
(51) Int. Cl.: H04N 21/4784, G06Q 30/0207

(54) **ACCESS TO MEDIA CONTENT BASED ON SAVED WATTS**

(71) Applicant: InterDigital CE Patent Holdings, SAS, 75017 Paris (FR)
(72) Inventor: BLONDE, Laurent, 35235 THORIGNE-FOUILLARD (FR); DEMARTY, Claire-Helene, 35520 MONTREUIL LE GAST (FR); REINHARD, Erik, 35630 HEDE-BAZOUGES (FR); REDMANN, William, GLENDALE, 91205 (US); AUMONT, Franck, 35770 VERN SUR SEICHE (FR); LE MEUR, Olivier, 35160 TALENSAC (FR)
(74) Representative: Vossius & Partner Patentanwälte Rechtsanwälte mbB

(57) **Abstract**

A device may provide media content as a digital reward. The device may determine a saved balance value associated with a quantity of saved watts associated with an operator of the device. The device may determine one or more digital rewards based on the saved balance value by querying a database. The device may display an indication of the one or more digital rewards. Each of the digital rewards may be displayed with an associated cost. The device may receive input selecting one of the one or more digital rewards and may update the saved balance value to reflect the selected one of digital rewards. The device may communicate an indication of the selected one of the one or more digital rewards and may receive digital content associated with the selected one of the one or more digital rewards. The device may display the received digital content.

## Description

### BACKGROUND

The present application is related to reducing individual and/or global carbon footprint(s) by lowering energy consumption of electronic devices or systems, which may or may not include a display unit(s). Examples of such electronic devices or systems may include, for example, consumer electronics (e.g., TVs, monitors), mobile devices, and personal devices.

### BRIEF SUMMARY

Systems, methods, and instrumentalities are disclosed for determining to provide access to media content as a digital reward. A device, which may be, for example, a wireless transmit and receive unit (WTRU) or network node, may be configured to determine a saved balance value, which may be, for example, a saved energy balance value. The saved balance value may be associated with a quantity of saved energy, which may be, for example, a quantity of saved watts, associated with an operator of the device. The device may be configured to determine the saved balance value by retrieving from storage a quantity of saved energy associated with the operator of the device.

The device may be configured to determine one or more digital rewards based on the saved balance value. The device may be configured to determine the one or more digital rewards based on the saved balance value by querying a database comprising digital rewards and associated costs for digital rewards that have an associated cost less than or equal to the saved balance value. The associated cost may be a quantity of saved energy, which may be, for example, a quantity or number of saved watts. The digital rewards may comprise one or more digital content items. Each of the one or more digital content items may be associated with a quality of the video item (e.g., video resolution), the time at which the video may be displayed/played, the length or duration of the video, and broadcast channel. The associated cost for a reward may vary depending upon the quality of the video (e.g., video resolution), the time at which the video may be displayed/played, and the length or duration of the video. Determining the one or more digital rewards may comprise querying the database to identify video items with associated costs based on the associated quality of the video, time of replay, and duration of reply, that are less than or equal to the saved balance value.

The device may be configured to display an indication of the one or more digital rewards. The device may be configured to display the indication of the one or more digital rewards by displaying a list of one or more digital rewards. Each of the one or more digital rewards may be displayed with an associated cost.

The device may be configured to receive input selecting one of the one or more digital rewards. For example, the device may be configured to receive user inputs selecting one of the one or more digital rewards on a visual display.

The device may be configured to update the saved balance value to reflect the selected one of the one or more digital rewards. The device may update the saved balance value by updating the storage comprising the saved balance value.

The device may be configured to communicate an indication of the selected one of the one or more digital rewards. The device may communicate the indication of the selected one of the one or more digital rewards by sending the indication of the selected one of the one or more digital rewards to a broadcast system.

The device may be configured to receive digital content associated with the selected one of the one or more digital rewards. The device may receive digital content associated with the selected one of the one or more digital rewards by receiving from the broadcast system the digital content associated with the selected one of the one or more digital rewards. The received digital content may be digital content broadcast on a channel that has been swapped in for a previous channel being communicated by a broadcaster system.

The device may be configured to display the received digital content.

At the conclusion of the displaying of the digital content, the device may begin receiving video data from a new broadcast channel that has been swapped in by a broadcast server for the channel on which the digital reward was communicated.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows functional features for providing access to media content based on saved watts.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

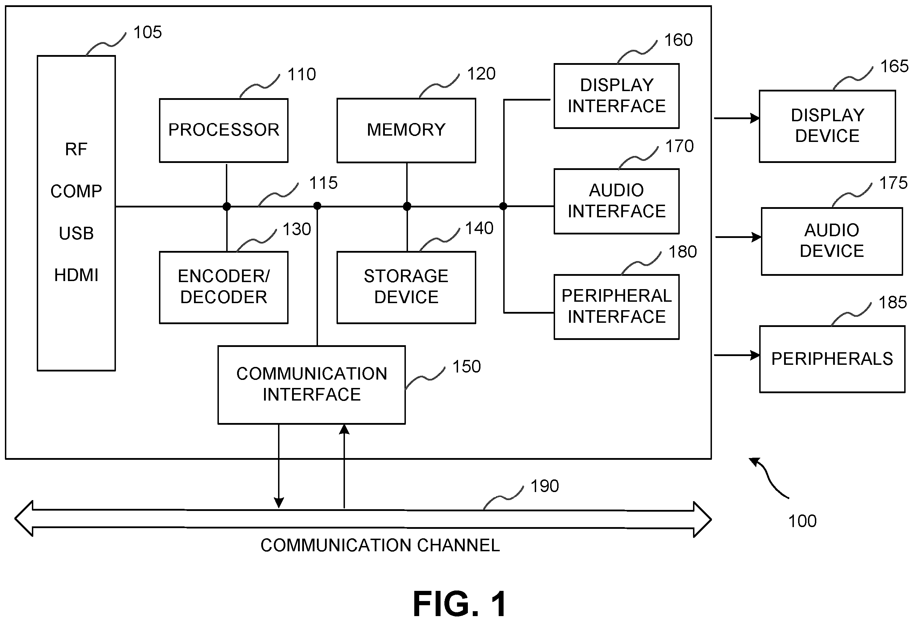

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, 3D, VR or AR glasses, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

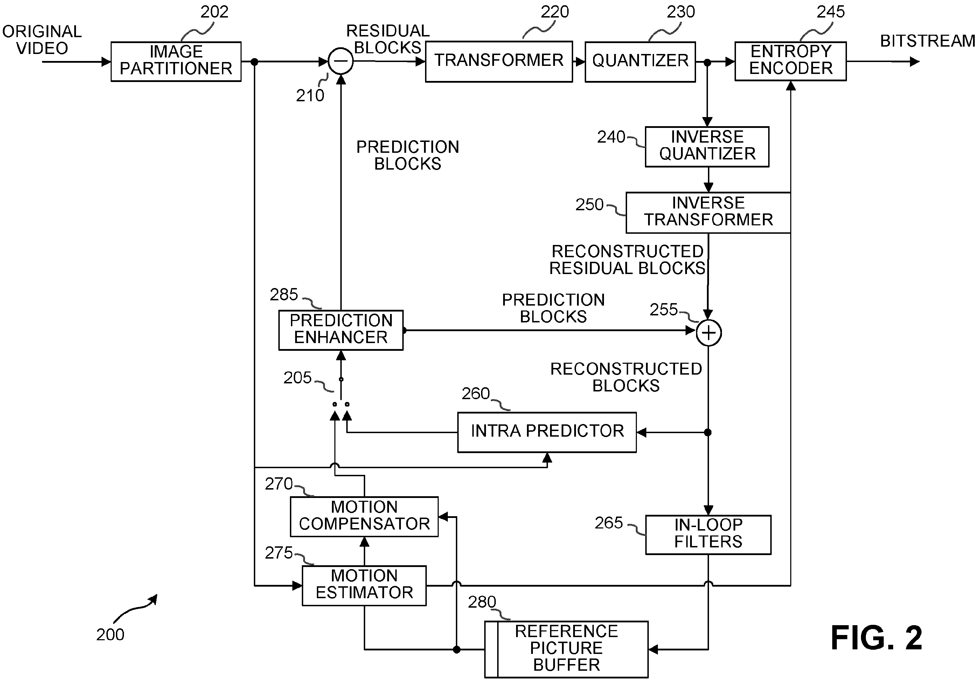

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

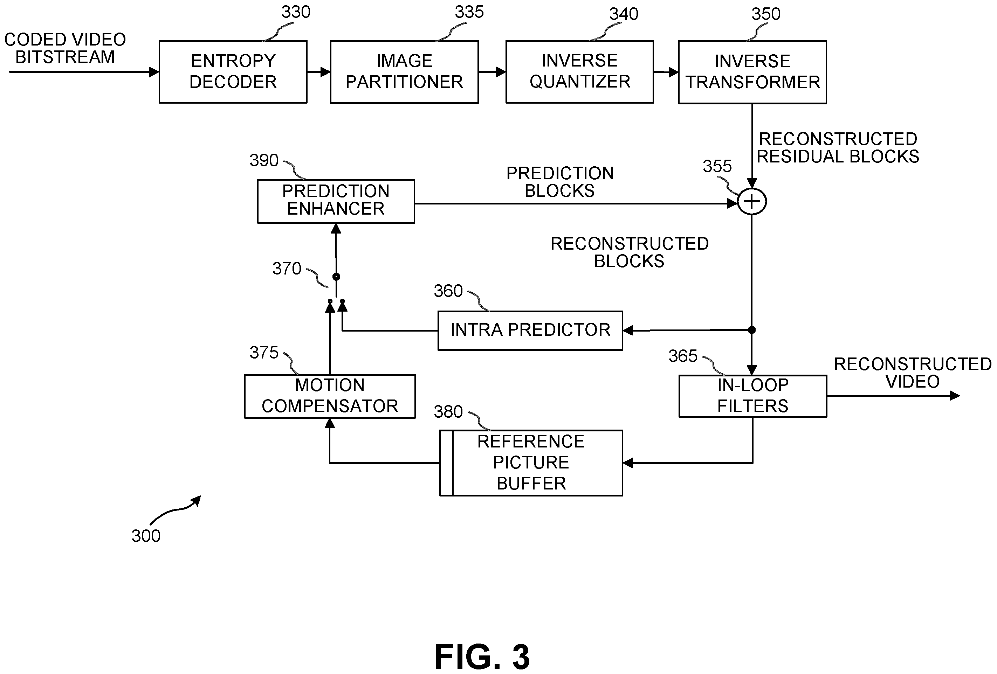

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Disclosed herein are systems, methods, and instrumentalities to provide media content as a digital reward. A device, which may be, for example, a WTRU, TV, or similar system, may determine a saved balance value associated with a quantity of saved watts associated with an operator of the device. The device may determine one or more digital rewards based on the saved balance value by querying a database. The associated cost for a reward may vary depending upon the quality of the video (e.g., video resolution), the time at which the video may be displayed/played, and the length or duration of the video. Determining the one or more digital rewards may comprise querying the database to identify video items with associated costs based on the associated quality of the video, time of replay, and duration of reply, that are less than or equal to the saved balance value.

The device may display an indication of the one or more digital rewards. Each of the digital rewards may be displayed with an associated cost. The device may receive input selecting one of the one or more digital rewards and may update the saved balance value to reflect the selected one of digital rewards. The device may communicate an indication of the selected one of the one or more digital rewards and may receive digital content associated with the selected one of the one or more digital rewards. The received digital content may be digital content broadcast on a channel that has been swapped in for the previous channel at a broadcaster system. The device may display the received digital content. At the conclusion of the displaying of the digital content, the device may begin receiving from a new broadcast channel that has been swapped in by a broadcast server for the channel on which the digital reward was communicated.

The disclosed systems, methods, and instrumentalities may relate to the global video chain (production, encoding, transmission, decoding, rendering).

The disclosed systems, method, and instrumentalities relate to reduction of energy requirements of WTRUs that may be manipulating images or videos, including, for example, displaying images and videos on screen.

Reduced energy consumption of electronic devices, e.g., WTRUs, TVs, etc., has become a preferred characteristic for electronic device manufacturers, which may seek to lessen or limit, as much as possible, the environmental impact and to contribute to the emergence of a sustainable display industry.

The increase in display resolution from SD to HD to 4K and beyond, as well as the introduction of high dynamic range imaging, has brought about a corresponding increase in energy requirements of display devices. The increased energy usage may not be consistent with global preferences to reduce energy consumption.

Displays are an important source of energy consumption, whether it be for battery-powered devices (e.g., smartphones) or in the global TV/video distribution chain. Other components of the video chain may also contribute to the total energy balance in relation to video content. Accordingly, the systems, methods, and instrumentalities disclosed herein do not only relate to, e.g., target, the energy reduction of displays.

Video processing may relate to the reduction of the energy requirements of clean energy (CE) and WTRUs, e.g., mobile display devices, and may preserve or control the quality of experience (e.g., contrast, luminance, temporal smoothness, or color levels).

Image/Video Processing Algorithms dedicated to energy reduction tasks may realize their tasks with different degrees of Quality of Experience. For example, they may introduce no defect, or no visible defects. They may also create visible defects of different strength or disturbance for the end user.

In case no defect or no visible defect is introduced (which may be referred to as a "flawless case"), there may not be a need to balance energy reduction with Quality of Experience, as the latter may not be modified. This may be, e.g., may usually be, the case in video broadcast, where there may be the constraint that the image displayed on the user's screen should show as few degradations as possible for a given transmission and display environment. Nevertheless, the users may wish to contribute to energy consumption reduction and may be prepared to accept some quality of experience reduction for this purpose.

While an absolutely high-quality requirement is understandable for feature movies or programs with a high artistic value, it may be evaluated that other program types such as, for example, a weather forecast, TV games, cartoons, sitcoms (which may or may not include some/many ads), may not require, e.g., need, an absolutely crisp quality. For example, this may not be required, e.g., needed, for all users and reducing quality on selected program types may be a possibility for many of them, even on broadcast programs, if there may be, for example, a gain in energy.

If defects are introduced, it may be useful, e.g., be required, to provide a capability to balance the energy reduction against quality of experience (QoE), to make QoE reduction acceptable. Defects, even if strong, may be acceptable to the end user and their presence may be even more accepted if the users are rewarded by, for example, explicit and direct benefits.

Introducing indicators such as, for example, health, money savings, and social media indicators, may place a reward on the moral satisfaction of users or future general benefits aspects. Systems, methods, and instrumentalities are disclosed herein that may provide more tangible benefits/rewards which may be, for example, in the form of video upgrades or access to premium content.

The systems, methods, and instrumentalities disclosed herein may use, e.g., debit, an already populated account with a currency (e.g., "Saved Watts"). The account may be created by users and may be, for example, managed by a broadcaster/operator, a subcontractor, or a third party. The currency may be a restricted currency, limited to precise usages such as, for example, the ones here described. Energy savings may be stored on such an account depending on user (or broadcaster/operator) or group of user's action . When a sufficient amount of currency, e.g., Saved Watts, is available on the account, the user may purchase/get a reward such as, for example, the ones listed above.

The currency to access different rewards may be measured in "Saved Watts" or similar values measuring "accounted saved energy" and may quantify or correspond to the user's efforts in consuming less energy. A currency may be a system of money in common use within a specific environment over time. It may be used as a medium of exchange. In connection with the systems, methods, and instrumentalities disclosed herein, Saved Watts may be defined as a currency for the media environment. Saved Watts may be earned by energy saving efforts and may be exchanged for valuable goods in a media ecosystem. The broadcaster or operator, or a subcontractor working for them, may manage an exchange and may, for instance, exchange video clips for Saved Watts.

Converting Saved Watts to an actual currency (Dollars or Euros for example) may be a choice of the broadcaster/operator. The broadcaster/operator operating an exchange may give rebates on a subscription fee, and/or may provide a reward such as, for example, a monetary type of reward.

With respect to broadcaster obligations regarding indirect greenhouse gas emissions, the disclosed systems, methods, and instrumentalities may record generalized energy savings by end users, and facilitates accounting of Saved Watts for use by the broadcaster or a service provider.

In connection with efforts to mitigate climate change, governments throughout the world, e.g., Europe, have increasingly required companies to report on their greenhouse gas emissions. The European Council introduced a reporting requirement for corporate sustainability. Companies in Europe, including those based elsewhere but with European operations, may be required to report indirect emissions across their value chain. There may be Obligations of the Carbon Inventory, which may be seen as an opportunity to reduce emissions.

Three Scopes, or categories of emissions may be defined. Scope 1 may refer to direct emissions, including those caused by company facilities and company vehicles. Scope 2 may refer to indirect emissions that are due to the purchase of electricity, steam heating and cooling for own use. Scope 3 may refer to indirect emissions that are due to emissions caused both upstream and downstream in the company's value chain.

Scope 3 reporting may be further broken down into a number of different classes - see Greenhouse Gas Protocol "Corporate Value Chain (Scope 3) Accounting and Reporting Standard", which may be supplemental to the GHG Protocol Corporate Accounting and Reporting Standard. The Scope 3 upstream activities may include, for example, the following: 1. Purchased goods and services; 2. Capital goods; 3. Fuel- and energy-related activities not included in scope 1 or scope 2; 4. Upstream transportation and distribution;5. Waste generated in operations;6. Business travel; 7. Employee commuting; and 8. Upstream leased assets.

Scope 3 downstream activities may include, for example, the following: 9. Downstream transportation and distribution; 10. Processing of sold products; 11. Use of sold products; 12. End-of-life treatment of sold products; 13. Downstream leased assets; 14. Franchises; and 15. Investments.

The Scope 3 categories relevant for broadcasters and media streaming companies may be classified as Category 1, "purchased goods and services", and Category 11, "use of products sold."

Consider a broadcaster sending out a program through digital terrestrial television (DTV). An end user device such as, for example, a television receiving the program will use energy to display it. Thus, a television that uses energy to display the program may be considered to cause emissions that are considered 'Scope 3, Cat 11 "indirect use phase." If a user were to reduce this energy by a video processing as, for example, described herein, and made available by the broadcaster, then the broadcaster may have a gain in its SCOPE 3 obligations. In view of this, in return, the broadcaster may reward the user for their effort and offer some gratification such as the examples noted herein.

Due to climate change, there may be a need, e.g., an urgent need, to reduce globally our carbon footprint. This may be done in the clean energy (CE) domain by, for example, reducing the energy consumption of devices for example.

Energy savings in terms of Saved Watts may be registered on accounts linked to a media user, media group of users, or a media equipment (e.g., TV set, display equipped devices, WTRU) managed by a service provider. While saving energy may be an effort for users in term of trade-offs on video quality, in term of room illumination adjustment or in terms of switching off the device, for example, some rewards may be made available to preserve user motivation to act for energy preservation.

The disclosed systems, methods, and instrumentalities may motivate users to save energy while watching programs on TV, and, moreover, to accept a poorer quality on some programs or to dim the screen or to switch it off, all of which may result in saving energy. To encourage their efforts, users may be compensated with rewards. The systems, methods, and instrumentalities disclosed herein may provide practical benefits to users and provide means for users to be compensated in proportion to their energy saving efforts.

An algorithm strength corresponding to a fine and continuous manner of controlling a strength of an algorithm may be disclosed. The strength may be illustrative of the quality of the output content and linked, e.g., directly linked, with the amount of energy consumption (or reduction) of the algorithm. However, a link with the amount of energy saved may not be explicit and clear for end users and may not encourage users to lower the quality of the output content, and thereby lower their energy consumption.

Information in the form of indicators may be displayed to users. Users may be given access to an explicit view of the value of some understandable indicators that may derive from an action/decision to reduce the quality of content consumed. The indications may comprise, for example, the following: direct benefits for their health, direct economic benefits, direct reduction in terms of pollution levels, direct indication on the protection of the biodiversity, direct indication on the preservation of the amount of raw materials, and/or benefit in terms of social recognition. A link between quality reduction and the other comprehensible indicators may be accessible in a fine and continuous manner, allowing the users to precisely control the level of quality in relation to the level of the indicators.

Energy Credit may be viewed as a service concept. It may be used as credit limit used by the operator network's "credit control." Energy credit is a service concept which can be used as an abstract measure of the energy impact on the network of delivering a service to a device, e.g., WTRU, TV, etc. Subject to operator's policy, the 5G system may support a mechanism to perform energy consumption credit limit control for services without QoS criteria. Energy credits, associated with a subscriber and used by the operator network's "credit control," may be consumed depending on the device behavior. For example, energy credits may be consumed depending on the data volume time and location, and based on the amount of energy consumed by the network to provide the service.

The concept of Energy Credit may allow for counting the amount of energy previously consumed by any user while using a service or a pool of services. In rewarding programs, e.g., classic rewarding programs, users may be rewarded for consuming more, which may be the case, for example when the users watch more programs.

In the disclosed systems, methods, and instrumentalities, an account (e.g., a local or remote file or database) may be employed to store energy savings gained by a user from his/her actions to reduce energy consumption of an electronic device, e.g., WTRU, TV set, etc. The stored energy savings may be used to determine which video/media rewards the user may receive.

Exploiting the opportunity for users to decrease their energy consumption, energy saving information may be estimated or measured and then stored on a specific account linked to the user or the device, e.g., TV set. As a reward, the savings, which may be considered as a currency, may give access to media rewards for the user.

Media rewards may comprise any suitable reward relative to media including, for example, the following:; providing access to content of interest;. Rewards or saved credits may also be transferred for someone else. Providing access to content of interest may comprise, for example, providing access to the following: higher interest TV programs such as, for example, content that requires payment, e.g., Pay TV content, that the user may not have subscribe to; audio programs on a music platform; online games; and/or other content with higher resolution or quality.

Systems, methods, instrumentalities may provide media rewards such as, for example, the example media rewards referenced herein. For example, systems, methods, and instrumentalities may provide media rewards by giving access to content of higher interest. Tangible benefits that are directly intelligible may be proposed to users, and may motivate users to use tools or behaviors for energy reduction. Users may be encouraged to act even by reducing the level of quality of the video algorithm, by switching off or dimming their TV set, for example. For the broadcaster or operator, there may be a direct benefit of energy reduction by users, contributing to their Scope 3 reporting.

Systems, methods, and instrumentalities are disclosed that may lessen , e.g., minimize, the energy consumption of visual media presentation or display, on electronic devices which may be, for example, TV sets or on mobile displays. It may be appreciated that while there may be instances that the disclosure refers to "TV", "TV or mobile display" and/or "AR or VR sets" may be understood. The disclosed systems, methods, and instrumentalities apply to any suitable device or system including, for example, a WTRU, TV, etc., that may be employed to provide access to digital content.

A reduction in consuming energy may be provided while maintaining / mastering the Quality of Experience (QOE) of the visual media presentation affecting resolution at variable levels.

Disclosed systems and instrumentalities may allow users to choose a personal balance between a given quality level of a displayed content after some video processing and the corresponding energy reduction achieved by modifying the quality level.

A value of energy reduction may not be easily understood nor provide sufficient motivation for users to change their habits and accept a reduction of quality.

The disclosed systems and instrumentalities enables users to exchange energy savings they may achieve into tangible media/video rewards purchased with energy saving credits. The reward may be access to higher interest TV programs as described herein.

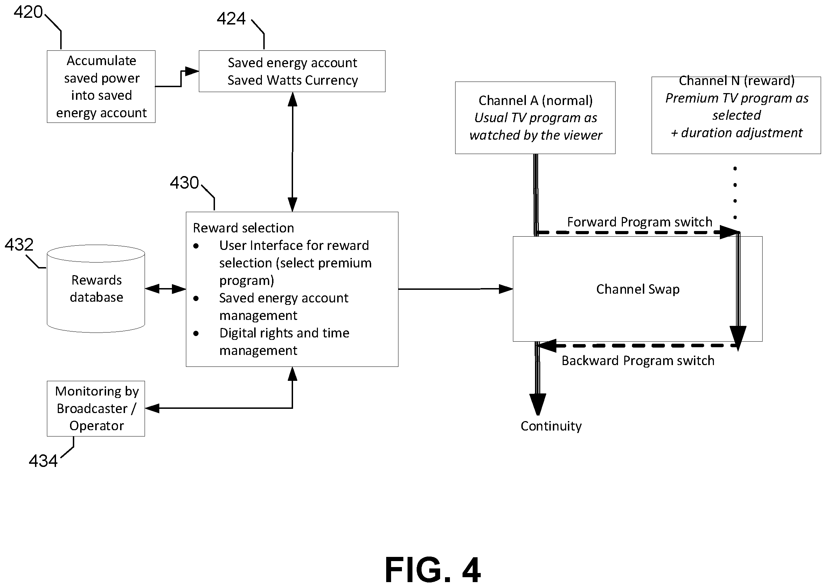

FIG. 4 is a diagram depicting functional features of systems, methods, and instrumentalities for providing access to media content based on saved watts. As shown, at 420, a device which may be, for example, a WTRU, TV, etc., may be configured to allow user to accumulate saved power or saved energy or saved watts or any other value given in energy/power unit, in a saved energy account. In examples, the saved amount of energy may be replaced by a saved amount of greenhouse gas emissions. The savings, which may be represented by a saved balance value, may be the result of actions by a user to reduce his or her energy consumption. For example, the user may have viewed on a device, e.g., WTRU, TV, etc., a media item at a reduced quality or at a reduced brightness level in order to save energy. The energy savings or saved balance value may be designated in a currency which may be referred to as, for example, "Saved Watts" and may be stored in a saved energy account as noted at 424. The saved energy account may be stored in a database locally at the device, e.g., WTRU, TV, etc., and/or may be stored at a remote location.

At 430, the device may be configured to provide an interactive user interface with which a user may select to receive one or more digital rewards in exchange for Saved Watts represented by a saved balance value. The device may be configured to query the saved energy account to retrieve for the operator or user of the device a saved energy balance value representing the Saved Watts associated with the operator or user. The device may query a database comprising the saved energy account for the saved energy balance value associated with the particular operator or user. The saved energy balance value is associated with a quantity of saved watts associated with an operator of the device. The device may be configured to determine the saved energy balance value by retrieving from storage the quantity of saved watts associated with the operator of the device. If the device may determine that the saved energy balance value for the operator is zero or too small for any reward, the device may be configured to end the transaction and generate a user interface communicating the lack of funds.

The device may be configured to access a rewards database 432 that has stored therein media related rewards that may be received in exchange for Saved Watts. For example, the rewards database 432 may have stored therein higher interest programs, audio programs, online games, and/or media content with varying levels of resolution or quality. The rewards database 432 may have stored with each reward, an associated cost measured in saved watts for receiving the particular digital reward. The rewards database 432 may further have stored for each reward digital rights and time management requirements. The digital rights and time management requirements indicate what limitations as to what users may access the particular reward and the time when the particular reward may be accessed.

The device may be configured to determine one or more digital rewards based on the saved energy balance value. The device may query the rewards database 432 and retrieve digital rewards that may be accessed by the particular operator or user. For example, the device may query the rewards database 432 for digital rewards that have an associated cost less than or equal to the saved energy balance value for the particular operator or user. The associated cost and saved energy balance value may be measured in a number of saved watts or other suitable currency value.

The device may query the rewards database 432 based on digital rights and time. For example, the device may query the rewards database 432 based on the operator or user of the device satisfying any digital rights limitations associated with rewards and based on the time the reward is available to be provided to users.

The digital rewards may comprise access to video which may be provided on various communication/broadcast channels. The quality of such video, the time of presenting the video, and the duration of the video may vary depending on the saved energy balance associated with the particular operator or user. For example, the same video may be available in multiple different levels of quality such as, for example, levels of resolution. A video provided at a higher level of quality may be associated with a higher cost in terms of saved energy. The same video provided at a lower level of quality may be associated with a lower cost. Video provided at particular times of the day may have varying associated costs. For example, video presented at a time of high viewing, e.g., prime time, may have a relatively high associated cost in terms of saved energy. The same video presented at a time of low viewership may have a relatively lower associated cost in terms of saved energy. The longer the duration of the video presented, the higher the associated cost in terms of saved energy. For example, video associated with an hour of video may have an associated cost in terms of saved energy. A duration of two hours of the same video feed may have a relatively higher associated cost in terms of saved energy, and a duration of one half an hour of the same video feed may have a relatively lower associated cost.

The device and/or rewards database 432 may determine digital rewards including access to videos. The device and/or rewards database 432 may determine which videos, at which quality, time, and duration may be available to the particular user or operator in view of the saved energy balance associated with the particular operator or user. The same video may be determined to be available as separate rewards with different combinations of quality, time, and duration. For example, viewing a particular video program may be available as a reward in multiple different contexts. The video program may be available in high quality, and during a prime time, for one half hour. The same video program may also be available in medium quality, during prime time, but for a full hour. Further, the same video program may also be available in low quality, outside of primetime, and for two full hours. The combinations of different quality, viewing time, and watch duration have different associated costs. The device and/or rewards database 432 may query for and determine combinations of videos, quality, time, and/or duration that result in associated costs that are less than or equal to the saved energy balance associated with the user.

The device may be configured to display an indication of the one or more digital rewards that have been determined to be available to the operator or user of the device. For example, the device may be configured to display a list of one or more digital rewards. The displayed list may comprise for each of the one or more digital rewards an associated cost in Saved Watts. The list may further indicate any time or other restraints that may be associated with each of the listed digital reward. For example, the list may indicate for each listed digital reward, a quality of the corresponding video data, a time the video data may be viewed, and a duration of the video. The possible rewards may be presented to the user in a list of premium contents that are available during an upcoming, e.g., next, time period, along with a cost in Saved Watts currency.

The device may be configured to receive input selecting one or more of the digital rewards. For example, the device may be configured to receive inputs with a pointing device selecting one or more digital rewards from a list of available rewards. The received inputs may indicate a selected reward and may indicate, for example, a particular channel, e.g., Channel N, day, time, and duration for receiving the reward. These indicators of Channel N, day, time and duration may have been computed and be determined depending on the available saved energy balance value, for example. The duration may depend on both the quality of the content corresponding to a reward and on the saved energy balance value. In examples, if a quality of a reward content is high, the duration of its viewing may be shorter than the one allowed for a reward content with a lower quality for the same saved energy balance value. The device may be configured to respond to the user inputs selecting one or more rewards by providing an indication of availability and time of a selected reward.

The device may be configured to update the saved balance value to reflect the selected one of the one or more digital rewards. The device may be configured to update the saved energy account to reflect the selections of rewards. Accordingly, the cost associated with each selected one of the one or more digital rewards may be decremented from the saved balance value in the energy account of the operator. The update to the saved balance value may complete the initial portion of the transaction.

The device may be monitored (434) by broadcasters and operators that may provide the digital rewards.

The device may be configured to communicate an indication of the selected one of the one or more digital rewards. For example, the device may be configured to send an indication of the selected one or more digital rewards to a broadcast system which is designated as providing the selected one or more digital rewards.

As shown in FIG. 4, the indication of the selected one of the one or more digital rewards may be communicated to the computing systems of the relevant broadcaster/operator. The systems of the relevant broadcaster/operator may be responsible for providing the digital reward to the device. The indication may comprise any relevant parameters associated with the transaction. For example, the indication may comprise parameters indicating the selected reward and the date, time and duration that the reward may be received at the device.

The broadcaster/operator system may be configured to receive the indication from the device and to perform a channel swap at the appropriate date and time. The broadcaster/operator system may monitor the date and time indicated for the reward digital reward to be provided. The broadcaster/operator system may, at an appropriate date and time, communicate to the device information informing operator/user of pending communication of media corresponding to the selected one of the one or more digital rewards. The communication may indicate a coming channel swap. The device may present information regarding the swap on its display.

As shown in FIG. 4, the broadcaster/operator system may manage multiple channels including, for example, Channel A and Channel N. Channel A may be designated to communicate media, e.g., TV programming, that may usually be watched by the operator of the device. Channel A may be associated with media normally consumed by the user. Channel N may be designated to communicate reward media which may be digital content associated with the selected one of the one or more digital rewards. The digital content may have the quality (e.g., resolution), the correct time, and be of the correct time duration to correspond to the previously received operator inputs. Channel N may be associated with premium media, e.g., TV, programming selected by the operator of the device for viewing as a reward.

In response to the received indication of the selected one of the one or more digital rewards, the broadcaster/operator system may identify and select Channel A, which may correspond to normally viewed content, and Channel N, which may correspond to the selected digital reward and premium media.

The broadcaster/operator system may be configured to adjust a duration of media from Channel N with respect to Channel A. For example, the broadcaster/operator system may adjust the media from Channel N so as to correspond to the content normally communicated on Channel A. The adjustment may be an adjustment of duration. Accordingly, the adjustment may allow the content associated with Channel N to replace the content associated with Channel A. If Channel N has a fixed duration content, no padding or temporal stretching may be implemented.

The broadcaster/operator system may be configured to communicate digital content associated with the selected one of the one or more digital rewards. The communication of digital content may comprise implementing a channel swap at the appropriate time consistent with the selected reward and selected data, quality of the data, time, and duration. The channel swap may comprise forwarding a program switch from Channel A to Chanel N. At the conclusion of the communication of the digital content associated with the selected one of the one or more digital rewards, the broadcaster/operator system may switch the communication of media from Channel N to Chanel A. SEI messages or equivalent metadata may be employed by the broadcaster/operator system and/or WTRU to manage the switches, the channels involved, and times for activating forward and backward switches.

The broadcaster/operator system may be configured to update records associated with Scope 3 reporting data.

The device may be configured to receive digital content associated with the selected one of the one or more digital rewards. For example, the device may be configured to receive from the broadcast/operator system the digital content associated with the selected one of the one or more digital rewards. The digital rewards may comprise one or more digital content items. Each of the one or more digital content items may be associated with a time in a broadcast channel, and a duration

At the conclusion of the displaying of the digital content, the device may begin receiving from a new broadcast channel that has been swapped in by a broadcast server for the channel on which the digital reward was communicated.

While examples may describe providing digital rewards by enabling access to content of higher interest via switched channels, the device and broadcaster/operator systems may be configured to provide digital rewards through video streaming. The device and the broadcaster/operator may provide access to another streamed content, rather than providing access to another channel.

In examples, the digital reward may enable the user to access to a content which the user may currently have the authority to view, but with an upgraded quality (e.g., resolution).

The broadcaster/operator and/or their partner in charge of the Saved Watts management and usage may be aware of a risk of rebound effect, which may refer to the possibility of a higher energy consumption for the reward than from the initial savings. The broadcaster/operator system may be configured to provide a counter measure to such effect, limiting consumption for the reward. Or a specific conversion rate may be used between the initial savings and the final reward content consumption.

Using the disclosed systems, methods, and instrumentalities, both the users and the broadcaster (or operator) may have an advantage to count saved Watts when reducing the energy consumption of displays. The users may be rewarded when spending their savings while the broadcaster (or operator) may manage these savings and report them in their Scope 3 reporting.

The availability of an account of Saved Watts for a display may influence the choices of a user toward reducing his/her energy consumption with a clearer view of the consequences of their choices and the motivation of being rewarded. Thus, they may be more inclined to act towards reducing their level of acceptable quality, consequently lowering their energy consumption and their GHG emission.

The disclosed systems, methods, and instrumentalities may address the businesses involving video coding/decoding, distribution, rendering and consumption.

Accounting for Saved Watts and activating the reward as described may allow for detecting operation of systems, methods, and instrumentalities consistent with the disclosure.

On the broadcaster/operator side, it may be possible to detect the signaling messages enabling the interaction with the user account and rewards.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example, as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device comprising:
a processor configured to:
determine a saved balance value;
determine one or more digital rewards based on the saved balance value;
display an indication of the one or more digital rewards;
receive input selecting one of the one or more digital rewards;
update the saved balance value to reflect the selected one of the one or more digital rewards;
communicate at least one indication of the selected one of the one or more digital rewards;
receive digital content associated with the selected one of the one or more digital rewards; and
display the received digital content.

2. The device of claim 1, wherein the saved balance value is associated with a quantity of one or more of saved watts, saved power, saved energy, or saved greenhouse gas emissions associated with an operator of the device.

3. The device of any of claims 1 to 2,
wherein the processor configured to determine the saved balance value is configured to retrieve from storage a quantity of saved watts stored by the operator of the device.

4. The device of any of claims 1 to 3,
wherein the processor configured to determine the one or more digital rewards based on the saved balance value is configured to:
query a database comprising digital rewards and associated costs for digital rewards that have associated costs less than or equal to the saved balance value.

5. The device of claim 4,
wherein the processor configured to query the database comprising digital rewards and associated costs is further configured to identify for each of the digital rewards an associated cost dependent on one or more of quality of a video, time of the video, or duration of the video.

6. The device of claim 4, wherein the associated costs comprises one or more of a number of saved watts, a quantity of saved powers, a quantity of saved energy, or a quantity of saved greenhouse gas emissions.

7. The device of any of claims 1 to 6,
wherein the processor configured to display the indication of the one or more digital rewards is further configured to display a list of one or more digital rewards, each of the one or more digital rewards displayed with an associated cost.

8. The device of any of claims 1 to 7,
wherein the processor configured to communicate the at least one indication of the selected one of the one or more digital rewards is further configured to send the at least one indication of the selected one of the one or more digital rewards to a broadcast system; and
wherein the processor configured to receive digital content associated with the selected one of the one or more digital rewards is configured to receive from the broadcast system the digital content associated with the selected one of the one or more digital rewards.

9. The device of claim 1 to 8,
wherein the one or more digital rewards comprise one or more digital content items; and wherein each of the one or more digital content items is associated with at least one of a time, broadcast channel, or potentially a duration.

10. A method of determining media content for display, comprising:
determining a saved balance value;
determining one or more digital rewards based on the saved balance value;
displaying an indication of the one or more digital rewards;
receiving input selecting one of the one or more digital rewards;
updating the saved balance value to reflect the selected one of the one or more digital rewards;
communicating at least one indication of the selected one of the one or more digital rewards;
receiving digital content associated with the selected one of the one or more digital rewards; and
displaying the received digital content.

11. The method of claim 10, wherein the saved balance value is associated with a quantity of one or more of saved watts, saved power, saved energy, or saved greenhouse gas emissions associated with an operator of a device.

12. The device of any of claims 10 to 11,
wherein determining the saved balance value further comprises retrieving from storage a quantity of saved watts associated with the operator of the device.

13. The method of any of claims 10 to 12,
wherein determining the one or more digital rewards based on the saved balance value further comprises querying a database comprising digital rewards and associated costs for digital rewards that have associated costs less than or equal to the saved balance value.

14. The method of claim 10 to 13,
wherein displaying the indication of the one or more digital rewards further comprises displaying a list of one or more digital rewards, each of the one or more digital rewards displayed with an associated cost.

15. The method of claims 10 to 14,
wherein communicating the at least one indication of the selected one of the one or more digital rewards further comprises sending the at least one indication of the selected one of the one or more digital rewards to a broadcast system; and
wherein receiving digital content associated with the selected one of the one or more digital rewards further comprises receiving from the broadcast system the digital content associated with the selected one of the one or more digital rewards.
